# FASCICULE DE BREVET EUROPEEN

(11) **EP 2 712 954 B1**
(45) Date de publication et mention de la délivrance du brevet: **20.07.2016**
(21) Numéro de dépôt: 13185839.1
(22) Date de dépôt: 24.09.2013
(51) Int. Cl.: D06F 75/12

(54) **APPAREIL DE REPASSAGE COMPRENANT UNE CUVE POUR LA GÉNÉRATION DE VAPEUR SOUS PRESSION ÉQUIPÉE D'UNE ÉLECTROVANNE**
BÜGELAPPARAT MIT EINER EIN ELEKTROMAGNETVENTIL AUFWEISENDEN DAMPFERZEUGUNGSKAMMER
IRONING APPARATUS WITH A STEAM GENERATION CHAMBER HAVING AN ELECTROMAGNET VALVE

(30) Priorité: 01.10.2012 FR 1259297
(43) Date de publication de la demande: 02.04.2014
(73) Titulaire: SEB S.A., 69130 Ecully (FR)
(72) Inventeur: Chartoire, Xavier, 42520 SAINT-APPOLINARD (FR); Napoli, Thierry, 38780 ESTRABLIN (FR); Moreau, Marc, 38000 GRENOBLE (FR)
(74) Mandataire: Bourrières, Patrice

(56) Documents cités:
- EP-A1- 0 972 875
- EP-A1- 1 239 071
- DE-T2- 69 908 278
- JP-A- H02 209 683
- US-A- 4 901 974

## Description

La présente invention se rapporte à un appareil de repassage domestique comprenant une cuve pour la génération de vapeur sous pression équipée d'une électrovanne comportant un conduit pour le passage de la vapeur en direction d'un fer à repasser, l'électrovanne comportant un noyau mobile en translation entre une position fermée, dans laquelle le noyau mobile vient obturer le conduit pour empêcher le passage de la vapeur, et une position ouverte dans laquelle la vapeur peut circuler librement au travers du conduit. La présente invention se rapporte plus particulièrement à un appareil dans lequel le noyau mobile est ramené dans la position fermée par un ressort de rappel et est déplacé vers la position ouverte sous l'effet d'un champ électromagnétique généré par une bobine dont l'alimentation électrique est commandée par une gâchette portée par le fer à repasser, l'électrovanne comportant un noyau fixe formant un butoir contre lequel le noyau mobile vient buter en position ouverte.

Un appareil présentant de telles caractéristiques est déjà commercialisé par la demanderesse et présente l'avantage de permettre la production d'un puissant flux de vapeur qui est envoyé instantanément, lorsque utilisateur exerce une pression sur la gâchette, au travers des trous de sortie de vapeur de la semelle.

Un appareil présentant des caractéristiques semblables est par exemple divulgué dans le document EP 0 972 875.

Cependant, un tel appareil présente l'inconvénient de produire un bruit métallique désagréable pour l'utilisateur à chaque ouverture de l'électrovanne.

Le document DE699 08 278 divulgue un appareil de repassage dans lequel une électrovanne est disposée dans le fer à repasser. Cette électrovanne présente également l'inconvénient de produire un bruit désagréable à chaque ouverture.

Les documents US4901974 et JPH2209683 divulguent un électrovanne munie d'un patin amortisseur, toutefois ces documents appartiennent au domaine éloigné de l'automobile.

Aussi, un but de la présente invention est de proposer un appareil de repassage pour la production de vapeur sous pression qui remédie à cet inconvénient.

A cet effet, l'invention a pour objet un appareil de repassage suivant la revendication une.

Selon une autre caractéristique de l'invention, la surface en saillie du patin est constituée par des bossages.

Selon encore une autre caractéristique de l'invention, le patin est fixé sur le noyau fixe.

Selon encore une autre caractéristique de l'invention, le patin présente une forme ondulée.

Selon encore une autre caractéristique de l'invention, le patin présente un corps en forme d'étoile.

Selon encore une autre caractéristique de l'invention, le patin est réalisé dans un matériau fluoroélastomère.

Selon encore une autre caractéristique de l'invention, le noyau mobile comporte une première extrémité longitudinale munie d'un clapet venant obturer le conduit lorsque le noyau mobile est en position fermée et une deuxième extrémité, opposée à la première, venant buter contre le patin lorsque le noyau mobile est en position ouverte.

Selon une autre caractéristique de l'invention, le ressort de rappel est disposé dans une cavité centrale du noyau mobile débouchant en regard du noyau fixe, le ressort de rappel comprenant une extrémité prenant appui directement sur le noyau fixe en passant au travers d'une ouverture centrale du patin.

Selon une autre caractéristique de l'invention, la bobine est alimentée en courant continu lorsque la gâchette est actionnée.

Selon l'invention, l'alimentation de la bobine, lors de l'actionnement de gâchette, s'effectue selon un profil de commande comportant successivement les phases d'alimentation suivantes:
- une première phase t₁ dans laquelle la tension d'alimentation évolue progressivement d'une tension basse à une tension haute,
- une deuxième phase t₂ dans laquelle la tension est maintenue à la tension haute,
- une troisième phase t₃ dans laquelle la tension d'alimentation est ramenée à la tension basse et est maintenue à ce niveau tant que la gâchette est actionnée.

Selon encore une autre caractéristique de l'invention, pendant la phase t₁, la tension évolue linéairement d'une tension basse de l'ordre de 130 V à une tension haute de l'ordre de 230 V, la phase t₁ durant préférentiellement de l'ordre de 60 ms.

Selon une autre caractéristique de l'invention, la phase t₂ s'étend sur une durée d'au moins 100 ms, et préférentiellement de l'ordre de 150 ms.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de repassage selon un mode particulier de réalisation de l'invention,
- la figure 2 est une vue en côté de la cuve de l'appareil de repassage de la figure 1 ;
- les figures 3 et 4 sont des vues en coupe, selon la ligne III-III de la figure 2, de l'électrovanne représentée seule avec le noyau mobile respectivement en position fermée et en position ouverte ;
- la figure 5 est une vue en perspective du noyau fixe équipé du patin ;
- la figure 6 est une vue en perspective du patin représenté seul ;
- la figure 7 représente un diagramme d'alimentation électrique de la bobine de l'électrovanne ;
- la figure 8 représente une vue en perspective du noyau fixe équipé d'un patin selon une variante de réalisation de l'invention.

Seuls les éléments nécessaires à la compréhension de l'invention ont été représentés. Pour faciliter la lecture des dessins, les mêmes éléments portent les mêmes références d'une figure à l'autre.

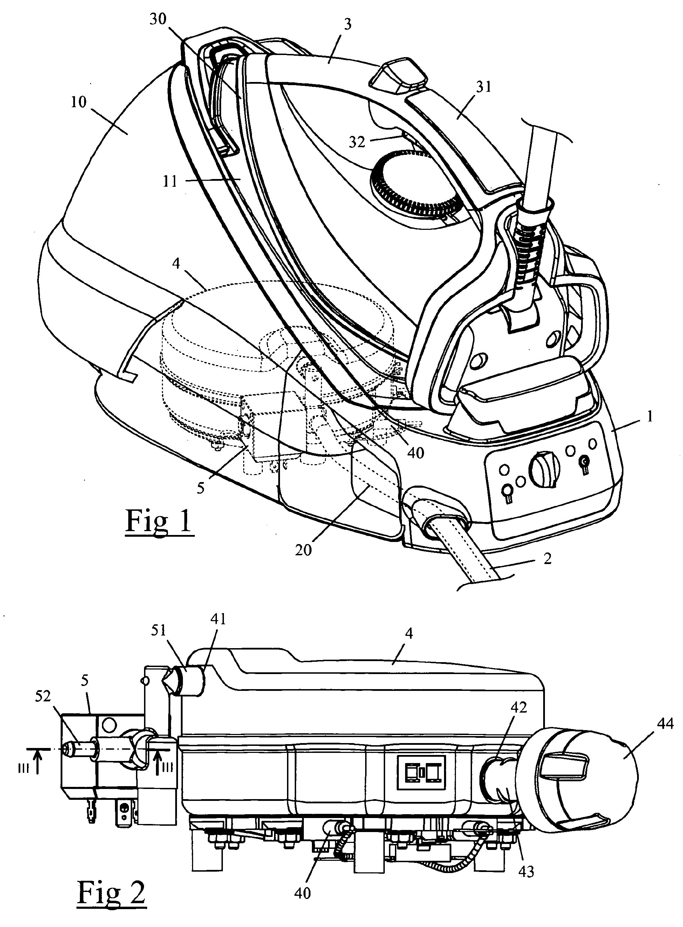

La figure 1 représente un appareil de repassage domestique comportant une base 1 reliée par un cordon 2 à un fer à repasser 3 comprenant une semelle 30 de repassage surmontée d'un boîtier muni d'une poignée 31, la base 1 comportant un réservoir 10 d'eau disposé sous un plan incliné 11 sur lequel le fer à repasser 3 peut reposer lors des phases inactives de repassage ou lors du rangement du fer à repasser 3.

Le réservoir 10 est, de manière connue en soi, relié à une pompe, non visible sur les figures, qui alimente une cuve 4 pour la génération de vapeur permettant la production de vapeur sous une pression de l'ordre de 4 ou 5 bars, la cuve 4 comprenant des moyens de chauffe avantageusement constitués par une résistance chauffante 40 en forme de U disposée sous le fond de la cuve 4, visible sur la figure 2.

Conformément à la figure 2, la cuve 4 comporte, dans sa partie haute, un orifice de sortie de vapeur 41 sur lequel vient se fixer une électrovanne 5 et comporte dans sa partie basse, un orifice latéral 42 recevant un raccord tubulaire 43 comprenant un orifice de vidange fermé par un bouchon 44.

L'électrovanne 5 comporte un raccord d'admission 51 fixé sur l'orifice de sortie de vapeur 41 de la cuve et comprend un raccord d'échappement 52 relié à un tuyau 20 de transport de la vapeur, visible sur la figure 1, qui est intégré dans le cordon 2 reliant la base 1 au fer à repasser 3.

L'électrovanne 5 est commandée à l'ouverture en appuyant sur une gâchette 32, visible sur la figure 1, disposée sous la poignée 31 du fer à repasser, permettant ainsi à la vapeur produite par la base 1 de s'échapper au travers de trous de sortie de vapeur ménagée dans la semelle 30 du fer à repasser.

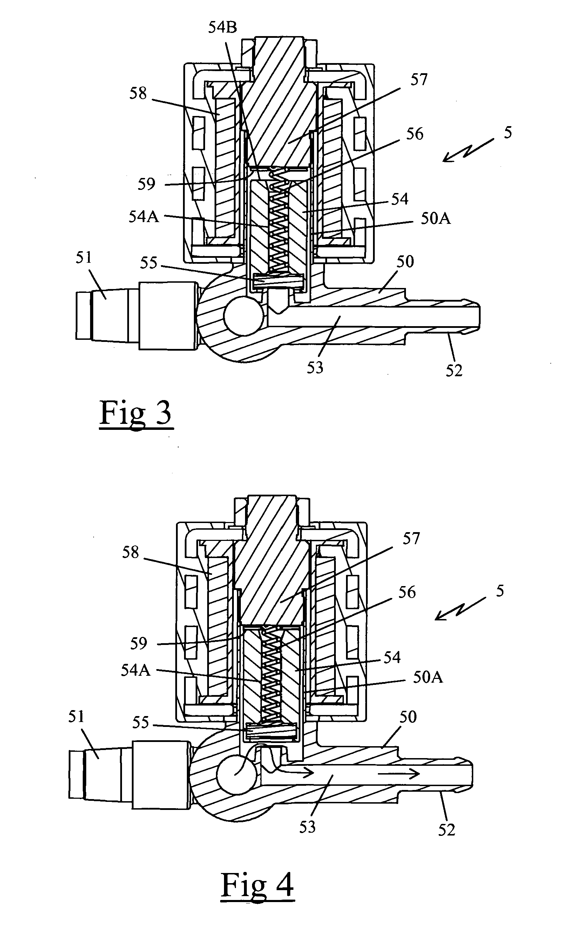

Conformément aux figures 3 et 4, l'électrovanne 5 comprend un corps principal 50 creux définissant un conduit 53 pour le passage de la vapeur, du raccord d'admission 51 vers le raccord d'échappement 52, et comporte un actionneur électromagnétique comprenant un noyau mobile 54 pouvant se déplacer en translation dans un logement 50A du corps principal 50, le logement 50A s'étendant perpendiculairement aux raccords d'admission 51 et d'échappement 52.

Le noyau mobile 54 est mobile entre une position fermée, illustrée sur la figure 3, dans laquelle une extrémité longitudinale du noyau mobile 54 munie d'un clapet 55 vient obturer un passage dans le conduit 53 pour empêcher la circulation de la vapeur au travers du conduit 53 et une position ouverte, représentée sur la figure 4, dans laquelle le clapet 55 autorise la circulation de la vapeur au travers du conduit 53, ainsi que cela est illustré par des flèches sur cette figure.

De manière préférentielle, le noyau mobile 54 présente un corps cylindrique comportant une cavité centrale 54A débouchant sur une extrémité longitudinale du noyau mobile 54, la cavité centrale 54A recevant un ressort de rappel 56 ramenant le noyau mobile en position fermée, ce ressort de rappel 56 prenant appui d'une part sur le clapet 55 et d'autre part sur un noyau fixe 57 formant un butoir de fin de course contre lequel une extrémité 54B du noyau mobile 54 vient prendre appui lorsqu'il se trouve en position ouverte.

Le noyau mobile 54 est réalisé dans un matériau ferromagnétique et est déplacé vers la position ouverte par un champ électromagnétique généré par une bobine 58 qui s'étend à la fois autour du noyau fixe 57 et du logement 50A du corps principal 50, l'alimentation électrique de la bobine 58 étant commandée par la gâchette 32 du fer à repasser.

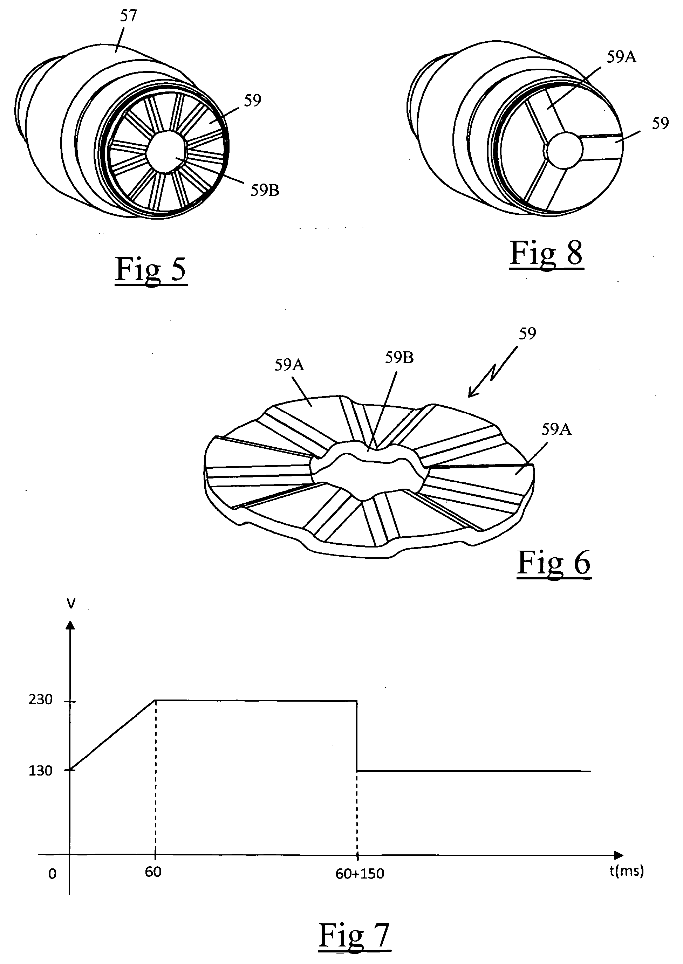

Plus particulièrement selon l'invention, un patin 59 est interposé entre le noyau fixe 57 et le noyau mobile 54 pour amortir le choc du noyau mobile 54 sur le noyau fixe 57, un tel patin 59 étant avantageusement fixé par collage sur l'extrémité longitudinale du noyau fixe 57, comme on peut le voir sur la figure 5.

Conformément à la figure 6, le patin 59 présente la forme d'une rondelle de forme ondulée possédant une succession de bossages 59A sur la surface venant au contact du noyau mobile 54 et présente une ouverture centrale 59B circulaire permettant le passage du ressort de rappel 56 pour que l'extrémité de ce dernier prenne appui directement contre le noyau fixe 57.

Le patin 59 est réalisé dans un matériau souple, métallique ou élastomère, présentant un bon pouvoir amortissant et ne perturbant pas trop le champ électromagnétique généré par la bobine 58.

A titre d'exemple, le patin 59 est réalisé dans un matériau fluroélastomère de type Viton^{®} et comporte six bossages 59A régulièrement répartis sur toute la circonférence du patin 59, l'épaisseur de matière du patin 59 étant avantageusement de l'ordre de 0.4 mm pour une épaisseur hors tout du patin, avec les ondulations, de l'ordre de 0,7 mm.

Afin d'obtenir une bonne stabilité du noyau mobile 54 en position ouverte, malgré les pertes dans le circuit magnétique générées par la présence du patin 59, ainsi qu'un bruit minimisé à l'ouverture de l'électrovanne 5, la bobine 58 est avantageusement alimentée en courant continu suivant un profil de commande illustré sur la figure 7.

Conformément à cette figure, le profil de commande de l'alimentation de la bobine 58 en courant continu comporte trois phases se déroulant successivement lors de l'actionnement de la gâchette 32.

Dans une première phase, la bobine 58 est alimentée avec une tension d'appel de 130 V à l'instant t=0 correspondant à l'actionnement de la gâchette 32, puis la tension d'appel est augmentée progressivement de manière linéaire pour atteindre une tension haute de 230 V au bout de 60 ms.

Une telle pente linéaire lors de la première phase d'alimentation, en partant d'une tension basse de 130V, permet de décoller le noyau mobile 54 de façon moins brusque que si la bobine 58 avait été alimentée directement avec la tension haute. En effet, durant cette première phase, le noyau mobile 54 commence son déplacement seulement lorsque la tension d'appel est suffisante pour générer une attraction magnétique contrant la force exercée par le ressort de rappel 56, cette tension se trouvant située entre la tension basse et la tension haute. L'accélération du noyau mobile 54 est donc plus progressive et l'impact du noyau mobile 54 sur le patin 59 est donc moins violent.

Dans une deuxième phase, la bobine 58 est alimentée à la tension haute de 230 V pendant une durée de 150 ms.

Cette deuxième phase présente l'avantage de garantir un temps minimum de 150 ms pendant lequel la tension est maintenue à la tension haute, ce qui permet de sécuriser l'ouverture de l'électrovanne 5 en maintenant une tension élevée suffisamment longtemps pour garantir le déplacement du noyau mobile 54 jusqu'à la position ouverte.

Dans une troisième phase, la tension est ramenée à la valeur basse de 130 V qui correspond à une valeur de tension de maintien du noyau mobile 54 en position ouverte. Une telle diminution de la tension, permet de limiter l'échauffement de la bobine 58 lorsque l'utilisateur maintien longtemps la gâchette 32 actionnée.

Enfin, lorsque l'utilisateur relâche la gâchette 32, la tension d'alimentation de la bobine 58 est ramenée à zéro de manière à ce que le ressort de rappel 56 ramène le noyau mobile 54 dans la position de repos correspondant à la fermeture de l'électrovanne 5, la baisse de tension, non illustrée sur la figure 7, pouvant être progressive pour réduire la violence de l'impact du clapet 55 sur le corps principal 50 de l'électrovanne lors de la fermeture de l'électrovanne 5.

L'appareil de repassage ainsi réalisé présente l'avantage de posséder une électrovanne 5 dont le bruit à l'ouverture est particulièrement réduit par la présence du patin 59, qui amortit le choc du noyau mobile 54 sur le noyau fixe 57, et par l'utilisation d'un profil d'alimentation de la bobine 58 optimisé pour réduire la violence du choc du noyau mobile 54 sur le patin 59.

En particulier, la forme ondulée du patin 59 présente l'avantage d'augmenter l'effet amortisseur tout en conservant un patin de faible épaisseur, ce qui permet de limiter les pertes sur le circuit magnétique et de garantir un bon maintien du noyau mobile 54 en position ouverte avec une tension d'alimentation réduite de la bobine 58.

Les bossages 59A à la surface du patin 59 présentent également l'avantage de réduire la surface de contact entre le noyau mobile 54 et le patin 59, ce qui permet d'éviter un effet de collage favorisé par la vapeur ambiante.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation représentée sur la figure 8, le patin 59 pourra présenter un corps en forme d'étoile, avantageusement à trois branches.

Ainsi dans une autre variante de réalisation non représentée, le patin pourra être partiellement engagé dans une gorge de forme complémentaire ménagée à l'extrémité du noyau fixe.

## Revendications

1. Appareil de repassage comprenant une cuve (4) pour la génération de vapeur sous pression équipée d'une électrovanne (5) comportant un conduit (53) pour le passage de la vapeur en direction d'un fer à repasser (3), l'électrovanne (5) comportant un noyau mobile (54) se déplaçant en translation entre une position fermée, dans laquelle le noyau mobile (54) vient obturer le conduit (53) pour empêcher le passage de la vapeur, et une position ouverte dans laquelle la vapeur peut circuler librement au travers du conduit (53), ledit noyau mobile (54) étant ramené dans la position fermée par un ressort de rappel (56) et étant déplacé vers la position ouverte sous l'effet d'un champ électromagnétique généré par une bobine (58) dont l'alimentation électrique est commandée par une gâchette (32) portée par le fer à repasser (3), ladite électrovanne (5) comportant un noyau fixe (57) formant un butoir de fin de course contre lequel une extrémité (54B) du noyau mobile (54) vient buter lorsqu'il se trouve en position ouverte, **caractérisé en ce qu'**un patin (59) est interposé entre le noyau fixe (57) et le noyau mobile (54) pour amortir le choc du noyau mobile (54) sur le noyau fixe (57), ledit patin (59) comportant une surface (59A) en saillie venant la première au contact de l'extrémité (54B) du noyau mobile (54) lorsque le noyau mobile est déplacé vers la position ouverte, la surface (59A) en saillie du patin (59) ne représentant qu'une partie de la surface de l'extrémité (54B) du noyau mobile, et **en ce que** la bobine (58) est alimentée en courant continu lorsque la gâchette (32) est actionnée, l'alimentation de la bobine (58), lors de l'actionnement de la gâchette (32), s'effectuant selon un profil de commande comportant successivement les phases d'alimentation suivantes:
- une première phase t₁ dans laquelle la tension d'alimentation évolue progressivement d'une tension basse à une tension haute,
- une deuxième phase t₂ dans laquelle la tension est maintenue à la tension haute,
- une troisième phase t₃ dans laquelle la tension d'alimentation est ramenée à la tension basse et est maintenue à ce niveau tant que la gâchette est actionnée.

2. Appareil de repassage selon la revendication 1, **caractérisé en ce que** ladite surface (59A) est constituée par des bossages.

3. Appareil de repassage selon l'une quelconque des revendications 1 à 2, **caractérisé en ce que** ledit patin (59) est fixé sur le noyau fixe (57).

4. Appareil de repassage selon l'une quelconque des revendications 1 à 3, **caractérisé en ce que** le patin (59) présente une forme ondulée.

5. Appareil de repassage selon l'une quelconque des revendications 1 à 3, **caractérisé en ce que** le patin (59) présente un corps en forme d'étoile.

6. Appareil de repassage selon l'une quelconque des revendications 1 à 5, **caractérisé en ce que** le patin (59) est réalisé dans un matériau fluoroélastomère.

7. Appareil de repassage selon l'une quelconque des revendications 1 à 6, **caractérisé en ce que** ledit noyau mobile (54) comporte une première extrémité longitudinale munie d'un clapet (55) venant obturer le conduit (53) lorsque le noyau mobile (54) est en position fermée et une deuxième extrémité, opposée à la première, venant buter contre le patin (59) lorsque le noyau mobile (54) est en position ouverte.

8. Appareil de repassage selon la revendication 7, **caractérisé en ce que** le ressort de rappel (56) est disposé dans une cavité centrale (54A) du noyau mobile (54) débouchant en regard du noyau fixe (57), ledit ressort de rappel (56) comprenant une extrémité prenant appui directement sur le noyau fixe (57) en passant au travers d'une ouverture centrale (59A) du patin (59).

9. Appareil de repassage selon la revendication l'une quelconque des revendications 1 à 8, **caractérisé en ce que**, pendant la phase t₁, la tension évolue linéairement d'une tension basse de l'ordre de 130 V à une tension haute de l'ordre de 230 V, la phase t₁ durant préférentiellement de l'ordre de 60 ms.

10. Appareil de repassage selon la revendication 9, **caractérisé en ce que** la phase t₂ s'étend sur une durée d'au moins 100 ms, et préférentiellement de l'ordre de 150 ms.

## Patentansprüche

1. Bügelgerät mit einem Behältnis (4) zur Erzeugung von Dampf unter Druck, das mit einem Magnetventil (5) ausgerüstet ist, das eine Leitung (53) für den Durchtritt des Dampfes in Richtung eines Bügeleisens (3) aufweist, wobei das Magnetventil (5) einen beweglichen Kern (54) aufweist, der sich zwischen einer geschlossenen Stellung, in der der bewegliche Kern (54) die Leitung (53) verschließt, um den Durchtritt des Dampfes zu verhindern, und einer offenen Stellung verschiebt, in der der Dampf frei durch die Leitung (53) zirkulieren kann, wobei der genannte bewegliche Kern (54) durch eine Rückstellfeder (56) in die geschlossene Stellung zurückgeführt und unter der Einwirkung eines von einer Spule (58) erzeugten elektromagnetischen Feldes in die offene Stellung gebracht wird, wobei die Stromversorgung der Spule durch einen an dem Bügeleisen (3) befindlichen Hebel (32) gesteuert wird, wobei das genannte Magnetventil (5) einen feststehenden Kern (57) aufweist, der einen Endanschlag bildet, gegen den ein Ende (54B) des beweglichen Kerns (54) stößt, wenn er sich in der offenen Stellung befindet, **dadurch gekennzeichnet, dass** zwischen dem feststehenden Kern (57) und dem beweglichen Kern (54) ein Druckstück (59) angeordnet ist, das den Aufprall des beweglichen Kerns (54) auf dem feststehenden Kern (57) dämpft, wobei das genannte Druckstück (59) eine vorstehende Fläche (59A) aufweist, die als erstes mit dem Ende (54B) des beweglichen Kerns (54) in Kontakt kommt, wenn der bewegliche Kern in die offene Stellung bewegt wird, wobei die vorstehende Fläche (59A) des Druckstücks (59) nur einen Teil der Fläche des Endes (54B) des beweglichen Kerns darstellt, und dass die Spule (58) mit Gleichstrom versorgt wird, wenn der Hebel (32) betätigt wird, wobei die Versorgung der Spule (58) bei Betätigung des Hebels (32) gemäß einem Steuerungsprofil erfolgt, das nacheinander die folgenden Versorgungsphasen umfasst:
- eine erste Phase t₁, in der die Versorgungsspannung nach und nach von einer niedrigen Spannung zu einer hohen Spannung anwächst,
- eine zweite Phase t₂, in der die Spannung auf dem hohen Spannungswert gehalten wird,
- eine dritte Phase t₃, in der die Versorgungsspannung wieder auf den niedrigen Spannungswert zurückgeführt und auf diesem gehalten wird, solange der Hebel betätigt wird.

2. Bügelgerät nach Anspruch 1, **dadurch gekennzeichnet, dass** die genannte Fläche (59A) aus Erhebungen besteht.

3. Bügelgerät nach einem der Ansprüche 1 bis 2, **dadurch gekennzeichnet, dass** das genannte Druckstück (59) an dem festen Kernstück (57) befestigt ist.

4. Bügelgerät nach einem der Ansprüche 1 bis 3, **dadurch gekennzeichnet, dass** das Druckstück (59) eine gewellte Form hat.

5. Bügelgerät nach einem der Ansprüche 1 bis 3, **dadurch gekennzeichnet, dass** das Druckstück (59) einen sternförmigen Körper aufweist.

6. Bügelgerät nach einem der Ansprüche 1 bis 5, **dadurch gekennzeichnet, dass** das Druckstück (59) aus einem Fluorelastomer hergestellt ist.

7. Bügelgerät nach einem der Ansprüche 1 bis 6, **dadurch gekennzeichnet, dass** der genannte bewegliche Kern (54) ein erstes Längsende aufweist, das mit einer Klappe (55) versehen ist, die die Leitung (53) verschließt, wenn sich der bewegliche Kern (54) in der geschlossenen Stellung befindet, und ein zweites, dem ersten Ende entgegengesetztes Ende aufweist, das gegen das Druckstück (59) stößt, wenn sich der bewegliche Kern (54) in der offenen Stellung befindet.

8. Bügelgerät nach Anspruch 7, **dadurch gekennzeichnet, dass** die Rückstellfeder (56) in einem zentralen Hohlraum (54A) des beweglichen Kerns (54) angeordnet ist, der gegenüber dem feststehenden Kern (57) mündet, wobei die genannte Rückstellfeder (56) ein Ende aufweist, das direkt auf dem feststehenden Kern (57) aufliegt und durch eine zentrale Öffnung (59A) des Druckstücks (59) verläuft.

9. Bügelgerät nach einem der Ansprüche 1 bis 8, **dadurch gekennzeichnet, dass** die Spannung in der Phase t1 linear von einer niedrigen Spannung von etwa 130 V linear zu einer hohen Spannung von etwa 230 V ansteigt, wobei die Phase t1 vorzugsweise etwa 60 ms dauert.

10. Bügelgerät nach Anspruch 9, **dadurch gekennzeichnet, dass** die Phase t₂ eine Dauer von mindestens 100 ms und vorzugsweise von etwa 150 ms hat.

## Claims

1. Ironing appliance comprising a tank (4) for the generation of pressurised steam provided with a solenoid valve (5) having a tube (53) for the passage of steam towards an iron (3), the solenoid valve (5) having a movable core (54) moving in translation between a closed position in which the movable core (54) closes off the tube (53) to prevent the passage of steam, and an open position in which the steam can flow freely through the tube (53), said movable core (54) being brought to the closed position by a return spring (56) and being moved towards the open position under the effect of an electromagnetic field generated by a coil (58) whose power supply is controlled by a trigger (32) carried by the iron (3), said solenoid valve (5) having a fixed core (57) forming a travel limit stop against which one end (54B) of the movable core (54) abuts when it is in the open position, **characterised in that** a shoe (59) is interposed between the fixed core (57) and the movable core (54) to dampen the shock of the movable core (54) on the fixed core (57), said shoe (59) having a projecting surface (59A) coming first into contact with the end (54B) of the movable core (54) when the movable core is moved towards the open position, the surface (59A) projecting from the shoe (59) representing only part of the surface of the end (54B) of the movable core, and **in that** the coil (58) is powered with direct current when the trigger (32) is actuated, the coil (58), when the trigger (32) is actuated, being powered according to a control profile comprising the following successive power supply phases:
- a first phase t₁ wherein the supply voltage changes gradually from a low voltage to a high voltage,
- a second phase t₂ wherein the voltage is maintained at the high voltage,
- a third phase t₃ wherein the supply voltage is reduced to the low voltage and is maintained at this level as long as the trigger is actuated.

2. Ironing appliance according to claim 1, **characterised in that** said surface (59A) consists of bosses.

3. Ironing appliance according to claim 1 or 2, **characterised in that** said shoe (59) is attached to the fixed core (57).

4. Ironing appliance according to any one of claims 1 to 3, **characterised in that** the shoe (59) has a corrugated shape.

5. Ironing appliance according to any one of claims 1 to 3, **characterised in that** the shoe (59) has a star-shaped body.

6. Ironing appliance according to any one of claims 1 to 5, **characterised in that** the shoe (59) is made of a fluoroelastomer material.

7. Ironing appliance according to any one of claims 1 to 6, **characterised in that** said movable core (54) has a first longitudinal end provided with a valve (55) closing off the tube (53) when the movable core (54) is in closed position and a second end, opposite the first, which abuts against the shoe (59) when the movable core (54) is in open position.

8. Ironing appliance according to claim 7, **characterised in that** the return spring (56) is arranged in a central cavity (54A) of the movable core (54) leading out opposite the fixed core (57), said return spring (56) comprising an end pressing directly on the fixed core (57) passing through a central opening (59A) of the shoe (59).

9. Ironing appliance according to any one of claims 1 to 8, **characterised in that**, during phase t1, the voltage changes linearly from a low voltage of about 130 V to a high voltage of about 230 V, the phase t1 lasting preferably about 60 ms.

10. Ironing appliance according to claim 9, **characterised in that** phase t₂ lasts for a period of at least 100 ms, and preferably about 150 ms.
